# EUROPEAN PATENT SPECIFICATION

(11) **EP 3 434 970 B1**
(45) Date of publication and mention of the grant of the patent: **01.09.2021**
(21) Application number: 17196090.9
(22) Date of filing: 12.10.2017
(51) Int. Cl.: F21V 7/22, F21V 7/16, F21V 7/06, F21V 29/60, A01G 7/04

(54) **ILLUMINATION DEVICE FOR DIRECTIONAL LIGHTING**
BELEUCHTUNGSEINRICHTUNG FÜR GERICHTETE BELEUCHTUNG
DISPOSITIF D'ÉCLAIRAGE POUR ÉCLAIRAGE DIRECTIONNEL

(30) Priority: 27.07.2017 EP 17183504
(43) Date of publication of application: 30.01.2019
(73) Proprietor: Kana, Rostislav, 739 41 Palkovice (CZ)
(72) Inventor: Kana, Rostislav, 739 41 Palkovice (CZ)
(74) Representative: Hertin und Partner Rechts- und Patentanwälte PartG mbB

(56) References cited:
- CN-A- 101 718 416
- CN-B- 104 235 745
- US-A1- 2014 177 204
- US-A1- 2015 313 090
- US-B1- 8 998 473

## Description

The invention relates to an illumination device for directional lighting, the device comprising a lamp shade. Patent publication CN104235745B discloses an illumination device for directional lighting, the illumination device comprising a lamp shade, wherein the lamp shade comprises elements with a trapeze shape which are configured to form a reflector, wherein the elements are mounted to a base plate so that they overlap one another to form a reflector, wherein the illumination device comprises at least a lighting means configured to emit light and a socket which is configured to receive the at least one lighting means which is arranged essentially perpendicular to the base plate. To proper development, plants require not only sufficient illumination, but also an optimum light spectrum and an optimum luminous flux. It is therefore the object of the present invention to provide an illumination device which provides optimum light spectrum and an optimum luminous flux for different production conditions for plants.

The object underlying the present invention is solved by the features of claim 1. Preferred embodiments of the invention can be found in the dependent claims. In particular, it is preferred to refer to the illumination device as parabolic lamp. Preferably, the lamp shade is referred to a parabolic lamp shade due to the curvature of the curved embossed elements forming the lamp shade

In the context of the present invention, the curvature of the lamp shade is proportional to the size and/or dimensions of the parabola. Preferably, the geometry of the single curved embossed elements comprises a specific tension which may differ because of the size and/or dimensions (length and/or width) of the single curved embossed elements, and/or their material. It is preferred that the curvature of the single curved embossed elements is arrived at by the way the curved embossed elements are mounted to the segment plate of the parabolic lamp. It is preferred that the segment plate may comprise a number of segments, for example 5, 6, 7, 8 or 9 segments or more. According to the invention, the curved embossed elements overlap. In the invention, the construction is particularly stable and robust. Additionally, the presence of the joint area is reduced.

In the context of the present invention, the base plate comprises a polygon plate, whereas the segment plate preferably comprises a trapezoid plate. The segment plates may cover each other and may be screwed together. The segment plates may be mounted to the base plate, in particular by screwing, in order to create the desired parabolic lamp shade. It is preferred that the lamp shade appears like an umbrella, which is preferably configured to copy the shape of flower heads, e.g. tulips, in nature.

It came as a surprise that due to its parabolic concept, the illumination device uses the lighting means emissions optimally. Thus, delivery of optimal luminous flux is ensured and the flux can be directed to different points of interest so that different production sites or places, where plants are grown, can be illuminated optimally. The plants in connection with which the illumination device according to the present invention can be used may be selected from the group comprising vegetables, fruits, tobacco, cannabis for medical use, in particular tomatoes, cucumbers, lettuce, bell pepper, chili and/or herbs. Surprisingly, the illumination intensity and the lumens flow to the plants are increased when using the illumination device according to the present invention. Additionally, the use of correctly curved embossed elements for forming the lamp shade of the illumination device generates more reflecting points. Advantageously, the presence of more reflection points enables the illumination device to redirect the light rays more evenly in the direction in which the light is needed. The reflector combines advantages of wide-spectrum, as well as deep-spectrum emitter. It is preferred that the curved embossed elements form an interior space wherein the base plate forms the upper boundary of this interior space. It is preferred that the opposite side of the interior space is open, so the light which is emitted by the at least one discharge tube can pass through. Preferably, the curved embossed elements represent the outer boundaries of the interior space forming the reflector of the illumination device.

The curved embossed elements have a trapeze shape and are mounted to a base plate. It is particularly preferred that the short side of the trapeze is mounted to one side of the base plate. In one preferred embodiment of the invention, the base plate has the shape of an octagon. Preferably, the octagon is formed from eight corners which are connected by eight edges. The edges may be equally long, so that an even octagon is obtained. For other purposes, the edges of the octagon may have different lenghts. In one preferred embodiment of the invention, the illumination device comprises eight curved embossed elements. The preferred number of eight curved embossed elements is particularly preferred, if the base plate has the shape of an octagon, as one curved embossed element may be mounted to each side of the octagon-shaped base plate. The illumination device may also comprise any other number of curved embossed elements. It is preferred that the shape of the base plate is adjustable to the number of the curved embossed elements.

The curved embossed elements form a parabolic lamp shade. The parabolic shape is obtained by the way the curved embossed elements arranged with regard to each other. The curved embossed elements may by curved themselves. They may also be flat plates so that the curved shape of the reflector is obtained by the arrangement of the curved embossed elements. In one preferred embodiment of the invention a diameter of the curved embossed elements is 70 cm or 100 cm.

It is preferred that the curved embossed elements and/or the base plate are made from stainless steel. Preferably, the components can also be manufactured from other materials, in particular metals, such as aluminium, e.g. if a light version of the illumination device is desired. In the context of the present invention, it is preferred that the terms "adjustable light spectrum" and "adjustable luminous flux" mean that light spectrum and the luminous flux can be adjusted, e.g. by a human user.

In the context of the present invention, the lamp shade and/or the illumination device comprises the shape of a parabola. The parabolic shape has shown to be the best form for the concentration of the light beam on a specific point, i.e. the focus of the light which is emitted by the illumination device. It is preferred that the light is distributed evenly under the lamp shade. Surprisingly, measurements have shown that the distribution of light arrived at by the invention affects strongly the growth of plants. Thus, if the illumination device according to the present invention is used in a greenhouse, the growth of plants may by enhanced by the light emitted by the illumination device according to the present invention.

The illumination device comprises at least a lighting means configured to emit light. It is preferred that the lighting means may also be referred to as lighting means, lighting material or lighting product. It is most preferred that the lighting means is formed from a discharge tube. It is known in the art that lighting means, such as the discharge tube, can be operated with different electrical powers. In the context of the present invention, the electrical power of the at least one lighting means is in a range of 250 to 600 Watt or in a range of 400 to 1000 Watt. In the context of the present invention, the electrical power of the lighting means may preferably have any value between 250 to 1000 Watt. If several lighting means are present in the illumination device, the lighting means may have the same electrical power. It may also b preferred that the lighting means may have different electrical powers.

It is particularly preferred that the size of the curved embossed elements is adaptable to the strength of the electrical power of the at least one lighting means. That means that the illumination device may comprise larger curved embossed elements if stronger lighting means with higher electrical powers are used. Analoguously, smaller curved embossed elements may be used in connection with lighting means using smaller electrical powers.

In one preferred embodiment of the invention, the at least one lighting means is arranged essentially in parallel to the base plate. This embodiment of the invention is also referred to as horizontal arrangement of the lighting means. If the light source is mounted horizontally, the light source may generate a shade above the illumination device. In this way, the intensity and the amount of light which reaches e.g. the plants which grow in a greenhouse can be controlled. There are plants that do not appreciate high light intensities or large amounts of lights or where such intensities or light amounts are not necessary for the growth of the plants. The different embodiments of the illumination device enable a large flexibility for the use of the illumination device for different kind of plants, in particular by enabling the variation of intensities and/or light mounts, preferably depending on the kind of plant that shall be grown in the greenhouse.

It may happen that the illumination device comes into contacts with the plants in the greenhouse. This may e.g. happen due to the growth of the plants. In order to prevent such an undesired contact between the lamp and the plants, the illumination device according to the present invention is preferably designed flexible with regard to the curvature and the dimensions of the curved embossed elements.

In the context of the present invention, the lighting means, for example the discharge tube, has an essentially cylindrical shape. Preferably, a virtual central line runs through the middle of the preferably cylindrical lighting means. The virtual central line is preferably characterized in that its distance to the outer boundaries of the lighting means are equal for all points forming the virtual central line. In this preferred embodiment of the invention, the virtual central line runs essentially in parallel to the base plate. The term "essentially" is not unclear to a person skilled in the art as the person skilled in the art knows that the mounting of a lighting means may lead to slight deviations from a total parallelity, wherein the deviation may lie in a range of 0 to 10 °, preferably in a range of 0 to 5 °.

It is preferred that the lighting means is present on the underside of the base plate which means that the lighting means is present in the interior space formed from the curved embossed elements. According to the invention, the illumination device comprises a socket which is configured to receive the at least one lighting means. In the preferred embodiment of the invention according to which the lighting means is arranged essentially in parallel to the base plate, the socket is arranged under the base plate.

In another preferred embodiment of the invention, the at least one lighting means is arranged essentially perpendicular to the base plate. This embodiment of the invention is also referred to as vertical arrangement of the lighting means. In this embodiment, it is preferred that the virtual central line running through the middle of the lighting means runs essentially perpendicular to the base plate. In this embodiment of the invention, the socket for receiving the lighting means is arranged on top of the base plate. In particular, it is preferred that the lighting means protrude into the interior space of the illumination device.

In the context of the present invention, it is preferred that the light is efficient to a degree to up to 100 %, if the light source is mounted vertically.

The illumination device comprises an open withdrawal which is configured to conduct away heat. The invention is particularly advantageous if the illumination device shall be used in the vicinity of inflammable matter because the heat which may be produced when operating the illumination device is conducted away before the inflammable matter starts to burn. Thus, if the reflector is fitted with an open withdrawal of hot air, the illumination device can advantageously by positioned close to the plants without any risk of their damage.

The open withdrawal comprises a flexible hose. The flexible hose can suck in hot air which is heated by the operation of the illumination device. In particular, the flexible hose is configured to conduct away the heat and/or hot air produced by the operation of the lighting means of the illumination device. Preferably, the flexible hose is arranged essentially perpendicular to the base plate. This preferred embodiment of the invention is referred to as "top withdraw exhaust". In the context of the present invention, this means preferably that the flexible hose enters essentially perpendicularly into the base plate. In this embodiment of the invention, the term "essentially" means that there may be some derivation of up to 5 ° from the perpendicularity under which the flexible hose gets into touch with the base plate.

For some purposes, it may be preferred that the flexible hose and the base plate enclose an angle alpha which is in a range between 0 to 60 °. This means that the flexible hose enters the base plate under a certain angle alpha, which may by in a range between 0 to 60 °. This preferred embodiment of the invention is referred to as "side withdraw exhaust". In particular, the flexible hose runs inclined with regard to the base plate in this particular embodiment of the invention. It may also be preferred that the angle alpha is in a range between 0 to 90 °.

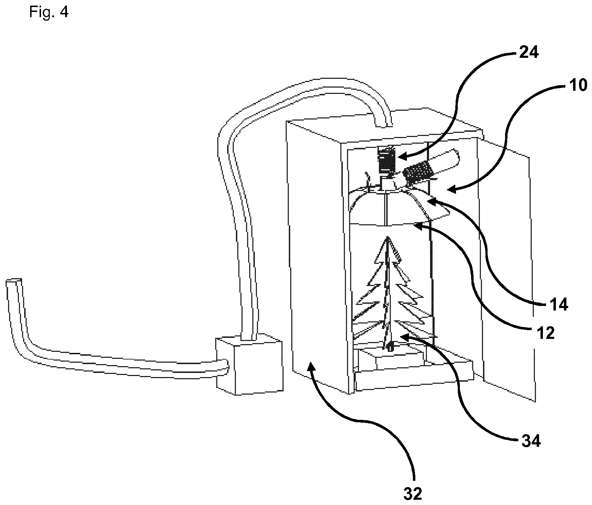

In the context of the present invention, it is preferred that the extraction of heat within the lamp shade is affected by a fan which may be arranged on the outside of the lamp shade. The position of the suction hose preferably depends on the type of box in which the plant is grown. It is preferred that a single box accommodates a single plant or a group of plants, depending on the size of the plants and the box. The box may serve as a greenhouse for the plants to be grown, but it may also be preferred that the boxes are positioned within a greenhouse. It came as a surprise that the boxes may function as a greenhouse themselves, when combined with an illumination device according to the present invention. The invention also relates to a system comprising an illumination device and a box, wherein the illumination device and a box may preferably be arranged as shown in Fig. 4. It is preferred that some boxes comprise openings on their sidewalls and/or above the illumination device. Surprisingly, the present invention can therefore be used and/or combined with conventional boxes. The extraction of heat may preferably replace the lightening with conventional lightening means and advantageously reduces the temperature in the space where the plants grow. Thus, an additional climate control can be omitted when using the illumination device according to the present invention in combination with the flexible mountable suction hose.

It is preferred that by placing the suction hose on the top part of the illumination device, the undesired excess heat, e.g. created by the operation of illumination devices, gets removed away from the lightening means and the bulb and/or tube area in the vicinity of the lightening means. The hose is preferably attached to a fan ventilator which may automatically be turned on with the light. The fan can have controlled strength of the suction depending on the setting of the thermostat placed in the box. Preferably, it can turn on, if the temperature rises inside the box.

There may also be an open withdrawal at the top part of the lamp shade through which the majority of the excess heat can be led away from the lightening means and/or the plants. Tests have shown that by placing the flexible suction hose directly to this top part of the lamp shade, the best cooling results are achieved.

The illumination device comprises a socket for the reception of the lighting means. The socket of the illumination device comprises an earthing device configured to keep components of the device close to earth potential. The invention is particularly advantageous as the danger of an electric shock can by reduced significantly by providing an earthing device. The earthing device is formed from a universal holder to which the lighting means can be mounted. Preferably, the earthing device is arranged in the vicinity of the socket which receives the lighting means. Thus, it is preferred that the earthing device may be present in the interior space of the illumination device or on the top of the base plate.

In the "side withdraw exhaust" embodiment of the invention, it is preferred that a tube socket is unscrewed from a holder, wherein the socket is fixed by fastening means to the base plate of the illumination device, which may preferably be formed like an octagon. The fastening means can preferably be formed from screws, in particular M4 screws. A cable is passed through a sleeve in order to connect the leads to the socket, which may preferably be a E40 socket. It is preferred that an earthing cable is connected to the metal parts of the baffle. The socket may then be screwed back to the holder. Preferably, the cable should be rearranged to prevent its tightening and its contact with hot parts. Preferably, the sleeve should be tightened so that the proper position of the cable is locked. A nut is preferably screwed to an anchoring bolt. Both anchoring bolts shall preferably by positioned over aluminium sheets located on top of each other to the base plate, which may e.g. be a stainless steel octagon, and tightened by a nut from the bottom.

In the "top withdraw exhaust" embodiment of the invention, the socket may preferably be fixed by two M4 screws as fastening means. It may also be preferred to fix them by nuts with washers. Preferably, the socket is positioned back to the holder with top withdrawal after arrangement of the cables.

The invention will be described by the following figures which show preferred embodiments of the illumination device.
- Fig. 1: preferred embodiment of the illumination device
- Fig. 2: examples for preferred base plates
- Fig. 3: preferred embodiment of the illumination device
- Fig. 4: preferred embodiment of the illumination device in a box with a plant
- Fig. 5: preferred embodiment of the illumination device with a side withdrawal and lightening means in vertical position
- Fig. 6: preferred embodiment of the illumination device with a side withdrawal and lightening means in horizontal position
- Fig. 7: preferred embodiment of the illumination device with a top withdrawal and lightening means in vertical position
- Fig. 8: preferred embodiment of the illumination device with a top withdrawal and lightening means in horizontal position
- Fig. 9: examples for and different views of preferred embossed elements, universal holders and withdrawal exhaust
- Fig. 10: preferred embodiments of the illumination device in one figure

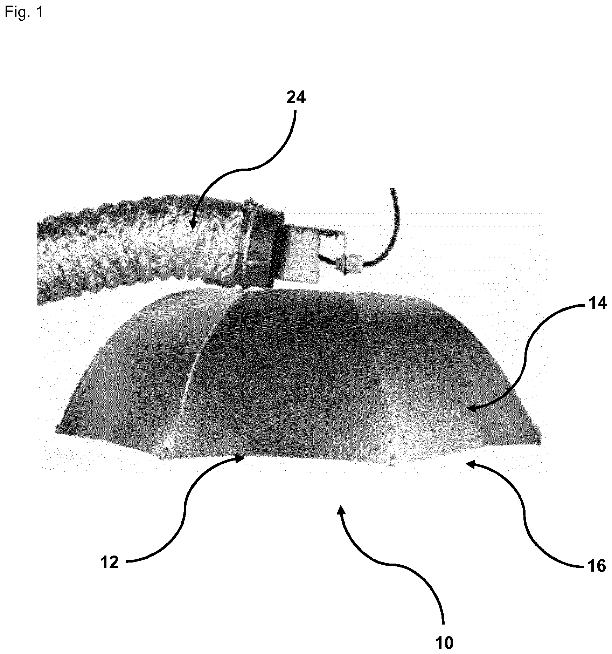

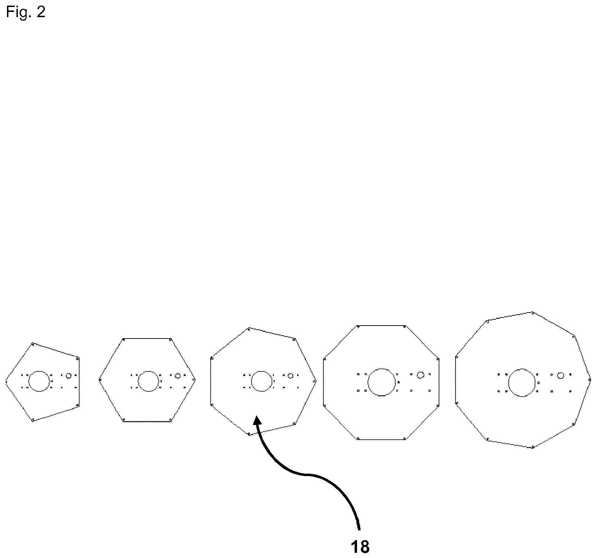

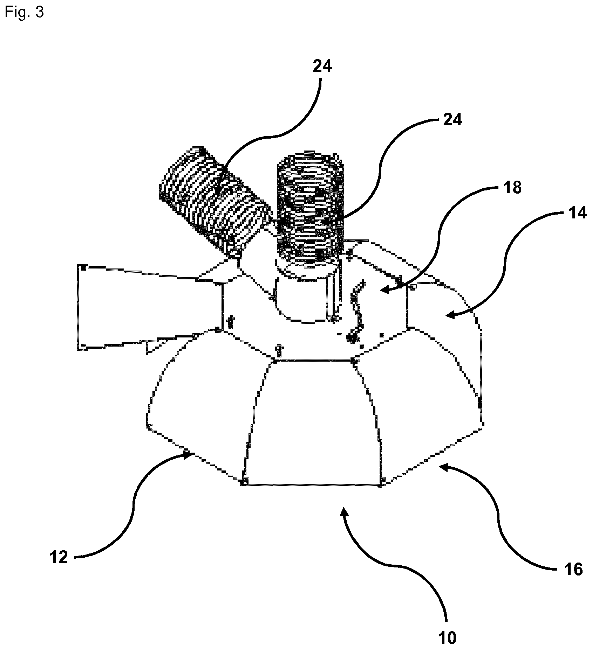

Fig. 1 and 3 show preferred embodiments of the illumination device (10). The illumination device (10) comprises a lamp shade (12), which is formed from curved embossed elements (14) which form a reflector (16). The number of curved embossed elements (14) may be eight, but other number of curved embossed elements (14) are also preferred. The curved embossed elements (14) are mounted to a base plate (18), which may have the shape of an octagon. As shown in Fig. 2, several different shapes are conceivable for the base plate (18). In particular, the base plate (18) may have 5, 6, 7, 8, 9, or more corners and/or edges.

The base plate (18) may be manufactured from steel and/or stainless steel. The curved embossed elements (14) may be manufactured from aluminium and may have a trapeze shape. It is preferred that the curved embossed elements (14) have four or six openings to receive fastening means. If the curved embossed elements (14) have four openings, the openings are preferably present in the corners of the trapeze shaped curved embossed elements (14). If the curved embossed elements (14) have six openings, the openings are preferably present in the corners and in the middle of the side edges of the preferably trapeze shaped curved embossed elements (14). Preferably, the diameter of the preferably trapeze shaped curved embossed elements (14) is in a range between 50 to 120 cm, wherein it is particularly preferred that the diameter is 70 or 100 cm.

The illumination device (10) comprises lighting means (20), which may preferably formed from a discharge tube, which is configured to emit light in a desired wavelength range. The illumination device (10) further comprises an open withdrawal (22) which is formed from a flexible hose (24). By the provision of the open withdrawal (22) and/or the flexible hose (24), it is possible to conduct away heat/hot air which may be present in the vicinity of the lighting means (20), when they are operated in order to generate light. In order to conduct away heat/hot air from the interior space of the illumination device (10) formed from the curved embossed elements (14), the open withdrawal (22) and/or the flexible hose (24) is/are configured to suck in air from the interior space, so that cold air can fill the interior space generating a cooling effect for the illumination device (10).

Preferably, the open withdrawal (22) may also be referred to as "withdraw exhaust". In the context of the invention, it may be preferred that the open withdrawal (22) is arranged perpendicularly with regard to the base plate (18) or that the withdraw exhaust (22) encloses an opening angle alpha with the base plate (18). It is preferred that the opening angle alpha can have any value between 0 and 90 °. It is particularly preferred that the opening angle alpha lies in a range between 0 and 60 °.

The lighting means (20) can be arranged essentially in parallel or perpendicularly with regard to the base plate (18) of the illumination device (10). It is preferred that the curved embossed elements (14) form an interior space which form the outer boundaries of the reflector (16) of the illumination device (10). Both in the parallel and in the perpendicular arrangement, it is preferred that the lighting means (20) is present in the interior space formed from the curved embossed elements (14).

The illumination device (10) comprises a socket (26) in order to receive the lighting means (20). It is preferred that the socket (26) may be arranged on top of the base plate (18) or on the underside of the base plate (18). It is most preferred that the socket (26) is arranged on top of the base plate (18), if the lighting means (20) are arranged essentially perpendicularly with regard to the base plate (18). It may also be preferred that the socket (26) is arranged on the underside of the base plate (18), if the lighting means (20) are arranged essentially in parallel with regard to the base plate (18).

The socket (26) comprises an earthing device (28) which may keep components of the illumination device (10) close to earth potential. The earthing device (28) is present in the form of a universal holder (30).

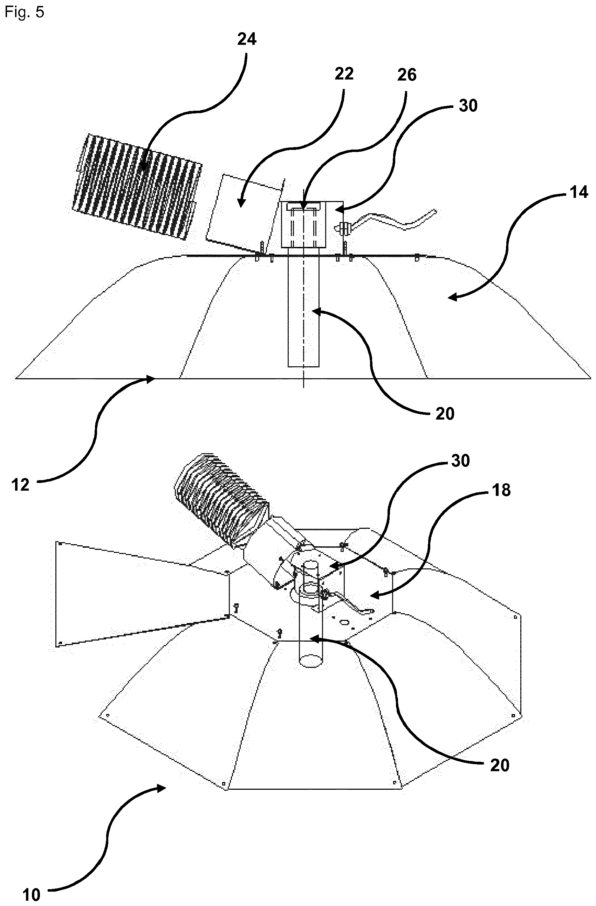

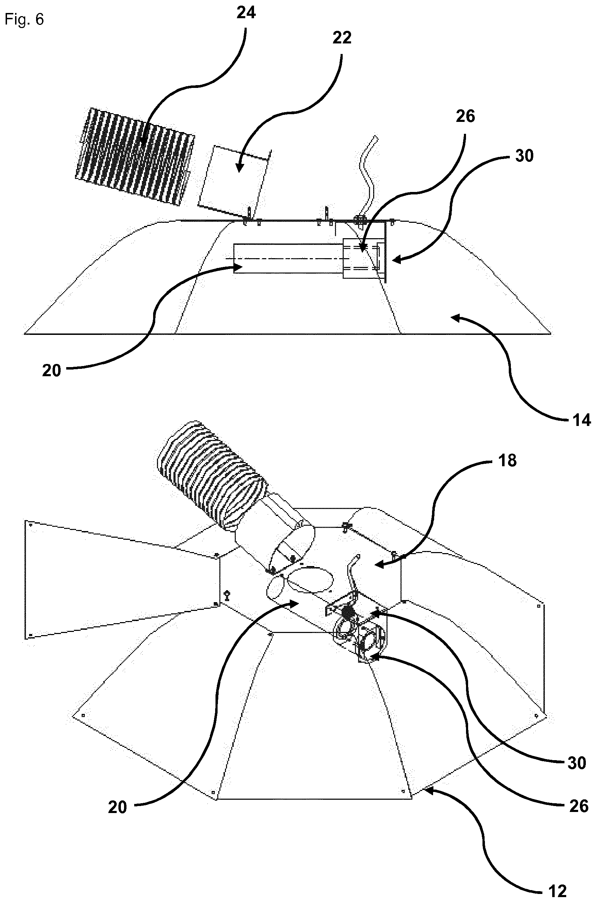

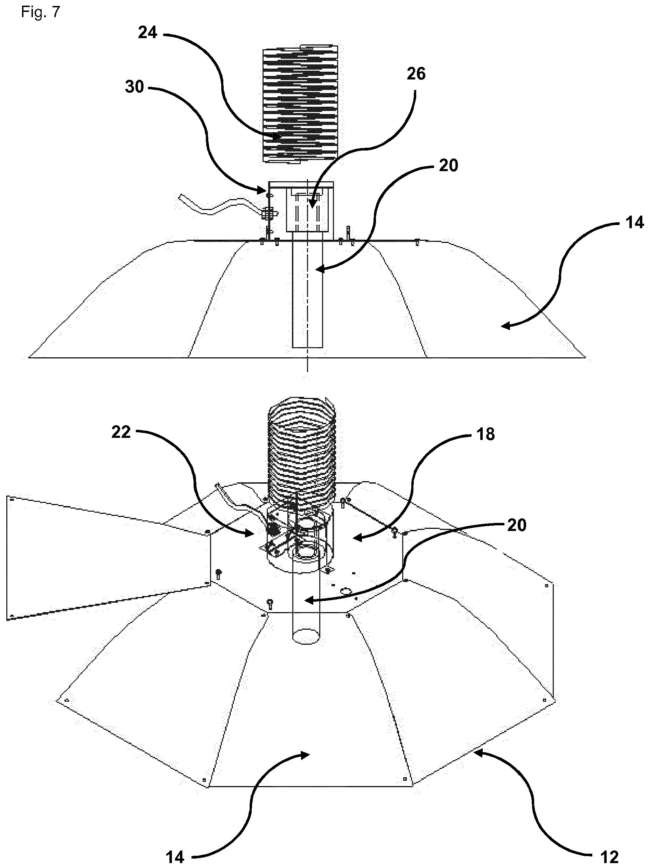

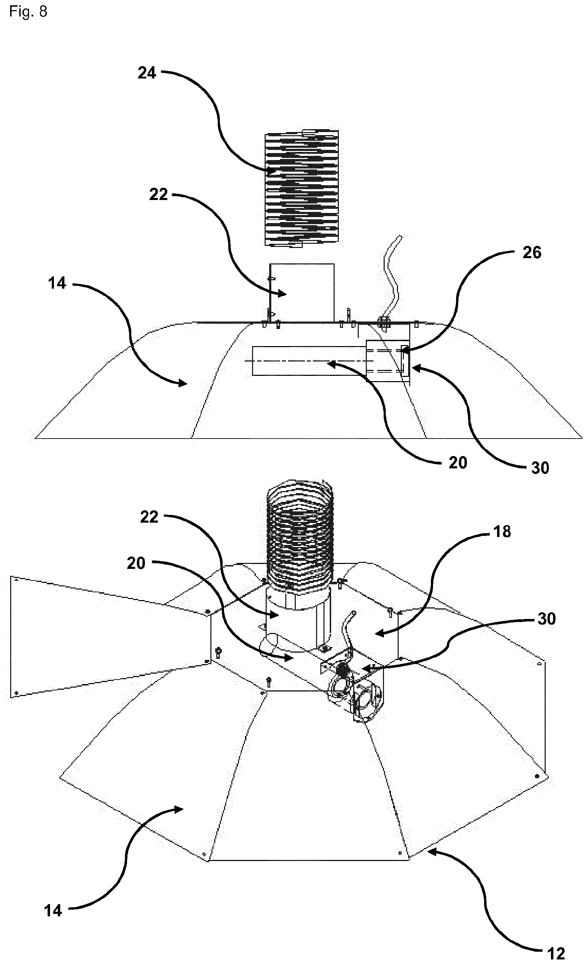

Fig. 4 shows a further preferred embodiment of the invention. In this embodiment, the plant (34) whose growth shall be enhanced is arranged within a box (32). It is preferred that a single box (32) accommodates a single plant (34) or a group of plants (34), depending on the size of the plants (34) and the box (32). The illumination device (10) according to the present invention is preferably arranged between the upper side of the box (32) and the plant (34). The flexible hose (24) may enter the box (32) through an opening in the upper surface of the box (32) or through an opening in a side wall of the box (32). Preferably, the flexible hose (24) can be arranged horizontally or vertically with regard to the lamp shade (12) of the illumination device (10). It is preferred that the system comprises further comprises a fan which may preferably be arranged outside the box (32). Furthermore, the system may comprise a blower cooling which is configured to extract the heat from the box (32). Fig. 5 shows a preferred embodiment of the illumination device (10) with a side withdrawal (22) and lightening means (20) in vertical position. The withdrawal (22) is configured to connect the flexible hose (24) to the lamp shade (12). A socket (26) is configured to receive lightening means (20). In the vicinity of the socket (26), a universal holder (30) is arranged which can be connected with a cable to conduct away electricity in order to earth the illumination device (10). The curved embossed elements (14) are configured to be mounted to a base plate (18) which may have different shapes. The curvature of the lamp shade (12) can be created by the arrangement of the curved embossed elements (14) to each other and/or by the arrangement of the curved embossed elements (14) with regard to the base plate (18) Fig. 6 shows a preferred embodiment of the illumination device (10) with a side withdrawal (22) and lightening means (20) in horizontal position. Fig. 7 shows a preferred embodiment of the illumination device (10) with a top withdrawal (20) and lightening means (20) in vertical position. Fig. 8 shows a preferred embodiment of the illumination device (10) with a top withdrawal (22) and lightening means (22) in horizontal position.

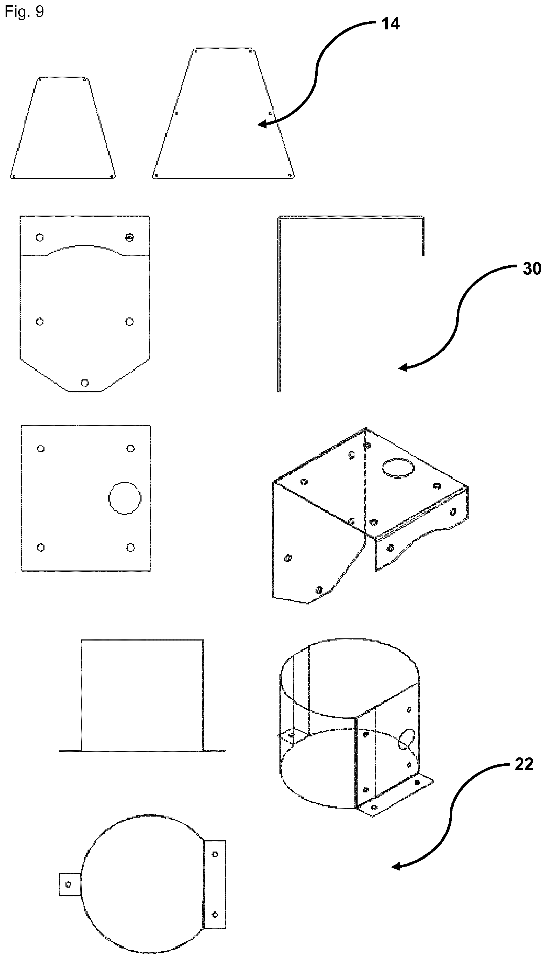

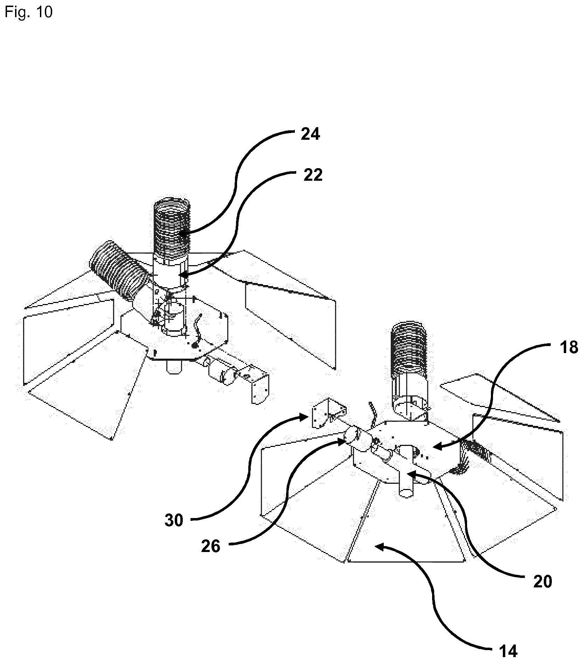

Fig. 9 shows examples for and different views of preferred embossed elements (14), universal holders (30) and withdrawal exhaust (22). Fig. 10 shows preferred embodiments of the illumination device (10) in one figure.

### List of Reference Signs:

- 10: illumination device
- 12: lamp shade
- 14: curved embossed elements
- 16: reflector
- 18: base plate
- 20: lighting means
- 22: open withdrawal
- 24: flexible hose
- 26: socket
- 28: earthing device
- 30: universal holder
- 32: box
- 34: plant

## Claims

1. Illumination device (10) for directional lighting, the illumination device (10) comprising a lamp shade (12)
wherein the lamp shade (12) comprises curved embossed elements (14) with a trapeze shape which are configured to form a reflector (16), wherein the curved embossed elements (14) are mounted to a polygonal base plate (18) so that they overlap one another to form a reflector with a parabolic shape, preferably in the shape of tulip, wherein the illumination device (10) comprises at least a lighting means (20) configured to emit light and a socket (26) which is configured to receive the at least one lighting means (20) and which comprises an earthing device (28) formed from a universal holder (30) and configured to keep components of the illumination device (10) close to earth potential,
wherein the socket (26) is arranged on top of the base plate (18) and the at least one lighting means (20) is arranged essentially perpendicular to the base plate (18) or
wherein the socket (26) is arranged under the base plate (18) and the at least one lighting means (20) is arranged essentially in parallel to the base plate (18), wherein the illumination device (10) comprises an open withdrawal (22) which is configured to conduct away heat, wherein the open withdrawal (22) comprises a flexible hose (24).

2. Illumination device (10) according to claim 1
**characterized in that**
the flexible hose (24) is arranged essentially perpendicular to the base plate (18).

3. Illumination device (10) according to claim 1 or claim 2
**characterized in that**
the flexible hose (24) and the base plate (18) enclose an angle α which is in a range between 0 to 90 °.

4. Illumination device (10) according to one or more of the preceding claims
**characterized in that**
the illumination device (10) comprises eight curved embossed elements (14) and/or the base plate (18) has the form of an octagon with equally long edges.

5. Illumination device (10) according to one or more of the preceding claims
**characterized in that**
the base plate (18) is manufactured from steel and/or stainless steel and the curved bossed elements are manufactured from aluminum.

6. Illumination device (10) according to one or more of the preceding claims
**characterized in that**
the electrical power of the at least one lighting means (20) is in a range of 250 to 1000W, preferably 250 to 600 Watt or in a range of 400 to 1000 Watt.

7. Illumination device (10) according to one or more of the preceding claims
**characterized in that**
a diameter of the curved embossed elements (14) is 70 cm or 100 cm.

## Patentansprüche

1. Beleuchtungseinrichtung (10) für gerichtete Beleuchtung, wobei die Beleuchtungseinrichtung (10) einen Lampenschirm (12) umfasst, wobei
der Lampenschirm (12) gebogene Prägeelemente (14) mit einer Trapezform umfasst, die konfiguriert sind, um einen Reflektor (16) zu bilden, wobei die gekrümmten Prägeelemente (14) an einer polygonalen Grundplatte (18) angebracht sind, sodass sie sich gegenseitig überlappen, um einen Reflektor mit einer parabolischen Form, vorzugsweise in der Form einer Tulpe, zu bilden, wobei die Beleuchtungseinrichtung (10) mindestens ein zum Emittieren von Licht konfiguriertes Leuchtmittel (20) und eine zur Aufnahme des mindestens einen Leuchtmittels (20) konfigurierte Fassung (26) umfasst, die eine aus einem Universalhalter (30) gebildete Erdungseinrichtung (28) umfasst, die konfiguriert ist, um Komponenten der Beleuchtungseinrichtung (10) in der Nähe vom Erdpotential zu halten,
wobei die Fassung (26) oben auf der Grundplatte (18) angeordnet ist und das mindestens eine Leuchtmittel (20) im Wesentlichen senkrecht zur Grundplatte (18) angeordnet ist oder
wobei die Fassung (26) unter der Grundplatte (18) angeordnet ist und das mindestens eine Leuchtmittel (20) im Wesentlichen parallel zur Grundplatte (18) angeordnet ist, wobei die Beleuchtungseinrichtung (10) eine offene Entnahme (22) umfasst, die konfiguriert ist, um Wärme abzuleiten, wobei die offene Entnahme (22) einen flexiblen Schlauch (24) umfasst.

2. Beleuchtungseinrichtung (10) nach Anspruch 1,
**dadurch gekennzeichnet, dass**
der flexible Schlauch (24) im Wesentlichen senkrecht zur Grundplatte (18) angeordnet ist.

3. Beleuchtungseinrichtung (10) nach Anspruch 1 oder Anspruch 2,
**dadurch gekennzeichnet, dass**
der flexible Schlauch (24) und die Grundplatte (18) einen Winkel α umschließen, der in einem Bereich zwischen 0 bis 90° liegt.

4. Beleuchtungsvorrichtung (10) nach einem oder mehreren der vorstehenden Ansprüche,
**dadurch gekennzeichnet, dass**
die Beleuchtungseinrichtung (10) acht gebogene Prägeelemente (14) umfasst und/oder die Grundplatte (18) die Form eines Achtecks mit gleich langen Kanten aufweist.

5. Beleuchtungsvorrichtung (10) nach einem oder mehreren der vorstehenden Ansprüche,
**dadurch gekennzeichnet, dass**
die Grundplatte (18) aus Stahl und/oder Edelstahl gefertigt ist und die gebogenen Prägeelemente aus Aluminium gefertigt sind.

6. Beleuchtungsvorrichtung (10) nach einem oder mehreren der vorstehenden Ansprüche,
**dadurch gekennzeichnet, dass**
die elektrische Leistung des mindestens einen Leuchtmittels (20) in einem Bereich von 250 bis 1000 W, vorzugsweise 250 bis 600 Watt oder in einem Bereich von 400 bis 1000 Watt liegt.

7. Beleuchtungsvorrichtung (10) nach einem oder mehreren der vorstehenden Ansprüche,
**dadurch gekennzeichnet, dass**
ein Durchmesser der gebogenen Prägeelemente (14) 70 cm oder 100 cm beträgt.

## Revendications

1. Dispositif d'éclairage (10) pour éclairage directionnel, le dispositif d'éclairage (10) comprenant un abat-jour (12)
dans lequel
l'abat-jour (12) comprend des éléments de gaufrage incurvés (14) en forme de trapèze qui sont conçus pour former un réflecteur (16), dans lequel les éléments de gaufrage incurvés (14) sont montés sur une plaque de base (18) polygonale de sorte qu'ils se chevauchent l'un l'autre pour former un réflecteur de forme parabolique, de préférence en forme de tulipe, dans lequel le dispositif d'éclairage (10) comprend au moins un moyen d'éclairage (20) conçu pour émettre de la lumière et une douille (26) qui est conçue pour recevoir l'au moins un moyen d'éclairage (20) et qui comprend un dispositif de mise à la terre (28) formé à partir d'un support universel (30) et conçu pour maintenir des composants du dispositif d'éclairage (10) à proximité du potentiel de terre,
dans lequel la douille (26) est disposée au-dessus de la plaque de base (18) et l'au moins un moyen d'éclairage (20) est disposé de manière sensiblement perpendiculaire à la plaque de base (18) ou
dans lequel la douille (26) est disposée sous la plaque de base (18) et l'au moins un moyen d'éclairage (20) est disposé de manière sensiblement parallèle à la plaque de base (18),
dans lequel le dispositif d'éclairage (10) comprend un retrait ouvert (22) qui est conçu pour évacuer la chaleur, dans lequel le retrait ouvert (22) comprend un tuyau flexible (24).

2. Dispositif d'éclairage (10) selon la revendication 1
**caractérisé en ce que**
le tuyau flexible (24) est disposé de manière sensiblement perpendiculaire à la plaque de base (18).

3. Dispositif d'éclairage (10) selon la revendication 1 ou la revendication 2
**caractérisé en ce que**
le tuyau flexible (24) et la plaque de base (18) forment un angle α qui est compris entre 0 et 90°.

4. Dispositif d'éclairage (10) selon l'une ou plusieurs des revendications précédentes
**caractérisé en ce que**
le dispositif d'éclairage (10) comprend huit éléments de gaufrage incurvés (14) et/ou la plaque de base (18) a la forme d'un octogone avec des bords de même longueur.

5. Dispositif d'éclairage (10) selon l'une ou plusieurs des revendications précédentes
**caractérisé en ce que**
la plaque de base (18) est fabriquée en acier et/ou en acier inoxydable et les éléments de gaufrage incurvés sont fabriqués en aluminium.

6. Dispositif d'éclairage (10) selon l'une ou plusieurs des revendications précédentes
**caractérisé en ce que**
la puissance électrique de l'au moins un moyen d'éclairage (20) est dans une plage de 250 à 1 000 W, de préférence de 250 à 600 watts ou dans une plage de 400 à 1 000 watts.

7. Dispositif d'éclairage (10) selon l'une ou plusieurs des revendications précédentes
**caractérisé en ce que**
un diamètre des éléments de gaufrage incurvés (14) est de 70 cm ou de 100 cm.
